(19) **Europäisches Patentamt**

**European Patent Office**

**Office européen des brevets**

(11) **EP 1 127 217 B1**

(12) **EUROPÄISCHE PATENTSCHRIFT**

(45) Veröffentlichungstag und Bekanntmachung des Hinweises auf die Patenterteilung:
**28.01.2004   Patentblatt 2004/05**

(51) Int Cl.⁷: **F02B 29/00**, F02N 9/04

(21) Anmeldenummer: **99947179.0**

(86) Internationale Anmeldenummer:
**PCT/CH1999/000495**

(22) Anmeldetag: **19.10.1999**

(87) Internationale Veröffentlichungsnummer:
**WO 2000/023697 (27.04.2000 Gazette 2000/17)**

(54) **VERFAHREN ZUM BETRIEB EINER DIESELBRENNKRAFTMASCHINE**

METHOD FOR OPERATING A DIESEL ENGINE

PROCEDE DE FONCTIONNEMENT D'UN MOTEUR DIESEL

(84) Benannte Vertragsstaaten:
**AT BE CH CY DE DK ES FI FR GB GR IE IT LI LU MC NL PT SE**

(30) Priorität: **21.10.1998  DE 19848418**

(43) Veröffentlichungstag der Anmeldung:
**29.08.2001   Patentblatt 2001/35**

(73) Patentinhaber: **ABB Turbo Systems AG**
**5401 Baden (CH)**

(72) Erfinder:
• **CODAN, Ennio**
**CH-5212 Hausen (CH)**
• **FIEDLER, Hugo**
**D-24214 Neuwittenbek (DE)**

• **VLASKOS, Ioannis**
**CH-5442 Fislisbach (CH)**

(74) Vertreter: **ABB Patent Attorneys**
**c/o ABB Schweiz AG**
**Brown Boveri Strasse 6**
**5400 Baden (CH)**

(56) Entgegenhaltungen:
DE-A- 3 737 743        FR-A- 2 358 562
FR-A- 2 527 685

• **"MAN-TURBODIESELMOTOR FUER NIEDERFLUROMNIBUS" ATZ AUTOMOBILTECHNISCHE ZEITSCHRIFT,DE,FRANCKH'SCHE VERLAGSHANDLUNG. STUTTGART, Bd. 92, Nr. 6, Seite 333 XP000168087 ISSN: 0001-2785**

**Beschreibung**

TECHNISCHES GEBIET

Bei der Erfindung wird ausgegangen von einem Verfahren zum Betrieb einer Dieselbrennkraftmaschine nach dem Oberbegriff des Patentanspruchs 1.

STAND DER TECHNIK

Aus Proc Instn Mech Engrs 1973, Vol. 187 35/73, S. 425 - 434, ist es bekannt, dem Kompressor eines Turboladers einer Dieselbrennkraftmaschine Zusatzluft aus einem Duckluftbehälter zuzuführen, um mit dieser Zusatzluft den Verbrennungsluftmangel bei Teillast, insbesondere bei reduzierter Motordrehzahl und in transientem Betrieb, zu beheben. Nachteilig dabei ist, daß diese Zusatzluft Schaufelschwingungen im Verdichterrad des Kompressors anregt. Beim Beschleunigen des Verdichterrades entsteht ein unerwünschter zeitlicher Verzug.

In dem Technischen Handbuch Dieselmotoren, herausgegeben von Prof. Dr.-Ing. Rudolf Sperber, 4. Auflage, VEB Verlag Technik Berlin 1986, S. 99 - 108, sind mehrere Anlaßarten angegeben, um einen Dieselmotor auf die für die Selbstzündung des Kraftstoffes erforderliche Anlaßdrehzahl zu bringen. Bei größeren Motoren wird das Anlassen mit Druckluft aus einer Anlaßluftflasche mit einem Druck von 3 MPa über ein Druckminderventil, einen zentralen Luftverteiler und über in den Zylinderköpfen angeordnete Anlaßventile angewendet. Die Anlaßventile sind federbelastete Rückschlagventile, die bei einsetzenden Zündungen sofort schließen und, bei umsteuerbaren Motoren, über eine Nockenwelle gesteuert werden. Bei Anlaßbeginn arbeitet der Dieselmotor als Druckluftmotor. Das Auffüllen der Anlaßluftflaschen kann über ein Ladeventil eines Motorzylinders oder durch einen unabhängig vom Motor aufgestellten Verdichter erfolgen. Eine Zufuhr von Zusatzluft nach erfolgtem Start des Motors ist nicht offenbart.

Aus der CH 624182 A5 ist eine mehrzylindrige Dieselbrennkraftmaschine bekannt, bei der beim Anlassen und auch im Teillastbetrieb in einigen Zylindereinheiten eine höhere Verdichtung und damit bessere Zündbedingungen dadurch erreicht werden, daß die übrigen Zylindereinheiten vorübergehend als Verdichter verwendet werden. Nachteilig dabei ist, daß während dieses Betriebes nur ein Teil der Zylinder des Motors für die Aufbringung der gewünschten Leistung zur Verfügung stehen.

Aus der EP 0367406 A2 ist es bekannt, eine Druckerhöhung im Zylinder der Dieselbrennkraftmaschine durch einen Turbolader zu erreichen, welcher von deren Auspuffgasen angetrieben wird. Auf der Welle des Turboladers ist der Rotor einer elektrischen Maschine angeordnet, welche beim Start bzw. beim Unterschreiten einer vorgebbaren Mindestdrehzahl der Dieselbrennkraftmaschine als fremdgespeister Motor und ansonsten als Generator betrieben wird. Diese Lösung ist sehr aufwendig.

Zum einschlägigen Stand der Technik wird auf die Veröffentlichung von Hans-Josef Schiffgens u. a., "Die Entwicklung des neuen MAN B&W Diesel-Gas-Motors 32/40 DG" in: MTZ Motortechnische Zeitschrift 58 (1997) 10, S. 584 - 590, hingewiesen, aus der ein Diesel-Gas-Motor bekannt ist, bei welchem dem Lufteinlaßkanal der Dieselbrennkraftmaschine ein Brenngas unter relativ niedrigem Druck zugeführt wird. Das Gasventil wird elektronisch gesteuert, hydraulisch geöffnet und durch Federkraft geschlossen.

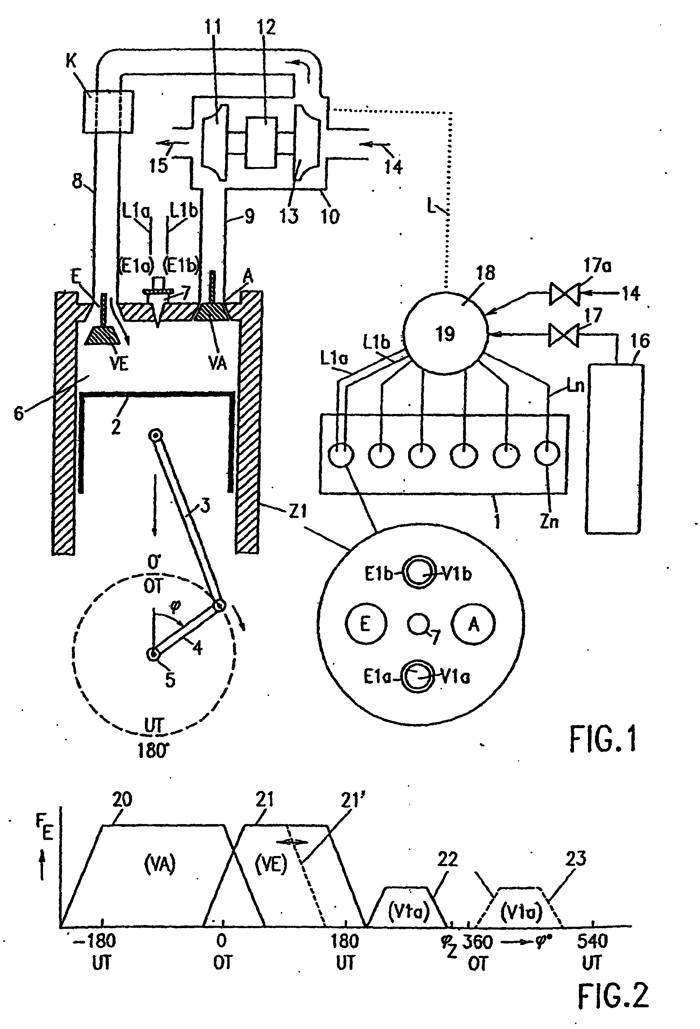

U. a. aus dem Buch von K. Zinner, "Aufladung von Verbrennungsmotoren", 2. Auflage, Springer-Verlag Berlin Heidelberg New York 1980, S. 221 - 228, ist das sog. Miller-Verfahren bekannt. Bei diesem Verfahren schließt das Lufteinlaßventil (VE) vor dem unteren Totpunkt (UT) des Kolbens der Dieselbrennkraftmaschine, wie es in Fig. 2 durch eine gestrichelt dargestellte Schließlinie (21') angedeutet ist. Beim Betrieb eines Motors im Millerverfahren mit festen Steuerzeiten. können im unteren Lastbereich gravierende Luftmangelerscheinungen auftreten.

Mit dem Oberbegriff des Patentanspruchs 1 nimmt die Erfindung auf einen Stand der Technik Bezug, wie er aus der Veröffentlichung: FR-A-2 358 562, bekannt ist. Zur Verbesserung der Beschleunigung und zur Verminderung der Drehzahlsenkung bei plötzlicher Lastaufnahme der Brennkraftmaschine wird hier bei geöffneten normalen Ansaugventilen aus einem zusätzlichen Luftspeicher durch die Ansaugventile und weitere Lufteinlassventile Druckluft in die Zylinder geleitet. Bei dieser Lösung kommt es aber möglicherweise zu Rückströmen. Ausserdem könnte der Verdichter ins Pumpen geraten. Der Druck muss daher gut geregelt werden.

DARSTELLUNG DER ERFINDUNG

Die Erfindung, wie sie im Patentanspruch 1 definiert ist, löst die Aufgabe, ein kostengünstigeres Verfahren zum Betrieb einer Dieselbrennkraftmaschine der eingangs genannten Art anzugeben, das auch bei Teillast und bei transienten Betriebszuständen in allen Zylindern ausreichend Verbrennungsluft zur Verfügung stellt.

Vorteilhafte Ausgestaltungen der Erfindung sind in den abhängigen Patentansprüchen definiert.

Ein Vorteil der Erfindung besteht darin, daß die Dieselbrennkraftmaschine bei allen Betriebszuständen besser arbeitet, insbesondere, daß Emissionen und thermische Belastungen reduziert werden.

Gemäß einer vorteilhaften Ausgestaltung der Erfindung können zum Starten vorhandene Einrichtungen auch für den Betrieb danach verwendet werden und je Zylinder der Dieselbrennkraftmaschine mehrere Gaseinlässe für Start- und Zusatzgas vorgesehen sein.

KURZE BESCHREIBUNG DER ZEICHNUNGEN

Die Erfindung wird nachstehend anhand von Ausführungsbeispielen erläutert. Es zeigen:

Fig. 1  schematisch eine 4Takt-Dieselbrennkraftmaschine mit Abgasturbolader und mehreren Gaseinlässen je Zylinder für Start- und Zusatzgas,

Fig. 2  eine Darstellung geöffneter Ventilflächen in Abhängigkeit von einem Kurbelwinkel,

Fig. 3  eine Darstellung des Zylinderdruckes in Abhängigkeit vom Kurbelwinkel für Leerlauf und Vollast der Dieselbrennkraftmaschine gemäß Fig. 1,

Fig. 4  Diagramme einer nennwertbezogenen Leistung der Dieselbrennkraftmaschine gemäß Fig. 1 in Abhängigkeit von der Zeit,

Fig. 5  Diagramme einer nennwertbezogenen Drehzahl und eines effektiven Mitteldruckes im Zylinder der Dieselbrennkraftmaschine gemäß Fig. 1 in Abhängigkeit von der Zeit,

Fig. 6  Diagramme des Verbrennungsverhältnisses bei einer 4Takt-Dieselbrennkraftmaschine gemäß Fig. 1 in Abhängigkeit von der Zeit,

Fig. 7  schematisch eine 2Takt-Dieselbrennkraftmaschine mit mehreren Gaseinlässen je Zylinder für Start- und Zusatzgas sowie

Fig. 8  eine Darstellung geöffneter Ventilflächen der 2Takt-Dieselbrennkraftmaschine gemäß Fig. 7 in Abhängigkeit vom Kurbelwinkel.

WEGE ZUR AUSFÜHRUNG DER ERFINDUNG

In den Figuren sind gleiche Teile mit gleichen Bezugszeichen gekennzeichnet.

Fig. 1 zeigt schematisch eine n-zylindrige 4Takt-Dieselbrennkraftmaschine (1) mit n gleichen Motorzylindereinheiten (Z1 - Zn), wobei eine Motorzylindereinheit (Z1) näher in einem Schnittbild und in einer Draufsicht dargestellt ist. Die Motorzylindereinheit (Z1) weist einen Kolben (2) auf, der über eine Pleuelstange (3) und eine Kurbel (4) mit einer Motorantriebswelle (5) gelenkig verbunden ist. Ein Kurbelwinkel ($\varphi$) beginnt in einem oberen Totpunkt (OT) des Kolbens (2) mit 0° und erhöht sich im Uhrzeigersinn, wobei er in einem unteren Totpunkt (UT) des Kolbens (2) einen Winkelwert von 180° erreicht. Die Motorzylindereinheit (Z1) weist ferner einen Brennraum (6) auf, der zylinderkopfseitig über einen Frischlufteinlaß (E) mit einer Frischluftansaugleitung (8) und über einen Abgasauslaß (A) mit einer Abgasleitung (9) in Verbindung steht. Der Frischlufteinlaß (E) ist durch ein steuerbares Lufteinlaßventil (VE) verschließbar und der Abgasauslaß (A) durch ein steuerbares Luftauslaßventil (VA). Eine ebenfalls zylinderkopfseitig angeordnete Kraftstoffeinspritzdüse (7) dient zum Einspritzen von Dieselkraftstoff kurz vor dem Erreichen eines Zündzeitpunktes ($\varphi_Z$), vgl. Fig. 2, bzw. vor dem Erreichen einer Zündtemperatur im Brennraum (6).

Ein aus dem Brennraum (6) nach einem Arbeitstakt der 4Takt-Dieselbrennkraftmaschine (1) durch den Abgasauslaß (A) ausströmendes Abgas (15) wird durch die Abgasleitung (9) zum Antrieb einer Turbine (11) eines Abgasturboladers (10) genutzt. Auf einer Welle des Abgasturboladers (10) ist ein Kompressor (13) befestigt, welcher Frischluft (14) komprimiert und über einen Luftkühler (K) in der Frischluftansaugleitung (8) dem Frischlufteinlaß (E) liefert. Es kann auch ein Rotor einer elektrischen Maschine (12) auf dieser Welle befestigt sein, welche beim Start der 4Takt-Dieselbrennkraftmaschine (1) als Motor und danach als Generator betrieben wird.

Die Motorzylindereinheit (Z1) weist zylinderkopfseitig ferner 2 separate Gaseinlässe bzw. Zusatzgaseinlässe bzw. Startgaseinlässe (E1a) und (E1b) für Druckluft bzw. ein Zusatzgas bzw. ein Startgas (19) auf, welche jeweils einen kleineren Öffnungsquerschnitt als der Frischlufteinlaß (E) haben. Diese Startgaseinlässe (E1a, E1b) sind durch steuerbare Rückschlagventile bzw. Zusatzgasventile bzw. Anlaßventile (V1a, V1b) verschließbar. Das Startgas (19) wird von einer Druckluftflasche bzw. einem Gasvorratsbehälter (16) mit einem Gasdruck von üblicherweise 3 MPa über ein Druckreduzierventil bzw. Druckgasregelventil (17) einem Zuluftverteiler bzw. Startgasverteiler (18) zugeführt, von wo es über Druckluftleitungen bzw. Druckgasleitungen (L1a, L1b, Ln) zu den Startgaseinlässen (E1a, E1b) der Motorzylindereinheiten (Z1 - Zn) gelangt. Je Motorzylindereinheit (Z1 - Zn) können ein oder mehrere Startgaseinlässe (E1a, E1b) und Anlaßventile (V1a, V1b) vorgesehen sein.

Fig. 2 zeigt die zeitliche Aufeinanderfolge der Öffnungen der Ventile (VA), (VE) und (V1a), wobei auf der Abszisse der Kurbelwinkel ($\varphi$) in Grad und auf der Ordinate eine Frischlufteinlaß-Öffnungsfläche ($F_E$) in willkürlichen Einheiten aufgetragen sind. Eine Flächenkurve (20) für das Luftauslaßventil (VA) zeigt an, daß dieses sich vor dem unteren Totpunkt (UT) zu öffnen beginnt und zwischen dem unteren Totpunkt (UT) und dem oberen Totpunkt (OT) ganz geöffnet ist. Kurz danach schließt es und beendet damit die Auslaßphase. Eine Flächenkurve (21) für das Lufteinlaßventil (VE) zeigt an, daß dieses kurz vor dem oberen Totpunkt (OT) zu öffnen beginnt, bis kurz vor dem darauffolgenden unteren Totpunkt (UT) voll geöffnet bleibt und kurz danach geschlossen ist. Damit endet die Einlaßphase des Lufteinlaßventils (VE). Nach dem Schließen dieses Lufteinlaßventils (VE) beginnen sich die Anlaßventile (V1a, V1b) gemäß einer Flächenkurve (22) zu öffnen, wobei der Übersichtlichkeit wegen nur das Anlaßventil (V1a) eingezeichnet ist. Diese Anlaßventile (V1a, V1b) schließen kurz vor dem Erreichen des nächsten oberen Totpunktes (OT) und vor dem Beginn der Zündung in einem Zündzeitpunkt ($\varphi_Z$), womit die Kompressionsphase endet. Vorzugsweise schließen diese Anlaß- bzw. Zusatzgasventile (V1a, V1b) vor dem Beginn des Einspritzens des Dieselkraftstoffes. Während der Öffnung dieser Anlaßventile (V1a, V1b) gelangt unverzögert Druckluft bzw. Start- oder Zusatzgas (19) in den Brennraum (6) der Motorzylindereinheit (Z1) und beseitigt dort den unerwünschten Verbrennungsluftmangel.

Eine gestrichelt dargestellte Flächenkurve (23) der Anlaßventile (V1a, V1b) zeigt die Öffnung der Anlaßventile (V1a, V1b) beim Start der 4Takt-Dieselbrennkraftmaschine (1).

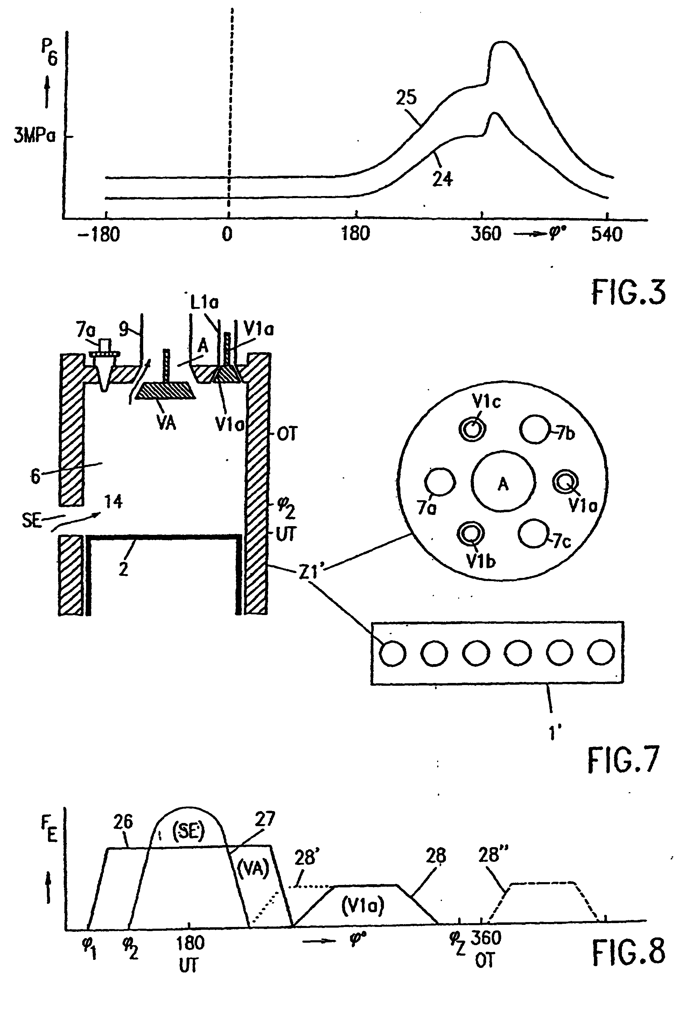

Fig. 3 zeigt einen Brennraumdruck ($p_6$) in MPa im Brennraum (6) der 4Takt-Dieselbrennkraftmaschine (1) in Abhängigkeit vom Kurbelwinkel ($\varphi$) für Leerlaufbetrieb in einer Druckkurve (24) und für Vollastbetrieb in einer Druckkurve (25). Man erkennt, daß bei Vollast ein Brennraumdruck ($p_6$) von 3 MPa früher erreicht wird als bei Leerlauf. Die Anlaßventile (V1a, V1b) müssen spätestens beim Erreichen des Druckes des Zusatzgases (19) im Brennraum (6) geschlossen werden.

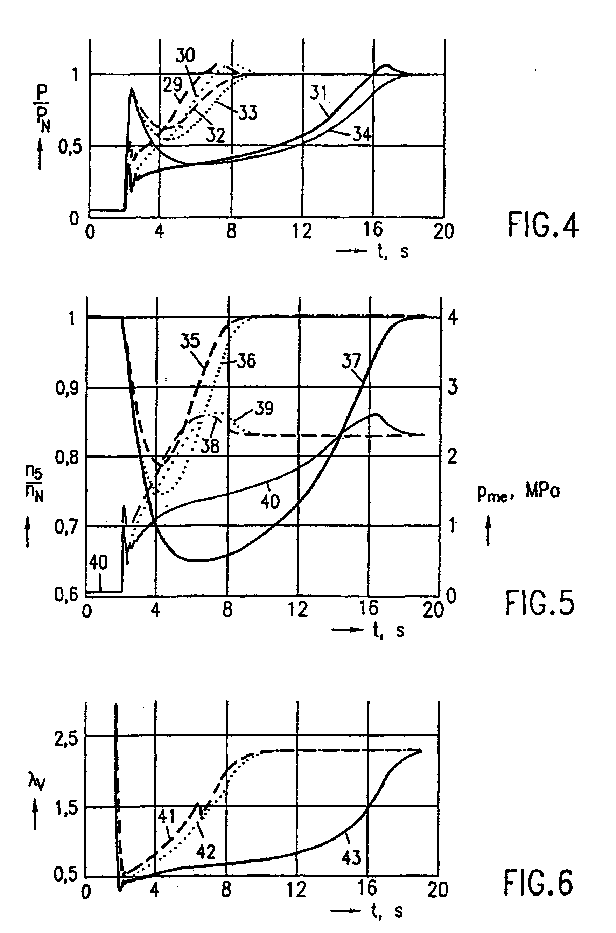

Fig. 4 zeigt komputersimuliert das Verhältnis einer Leistung (P) zu einer Nennleistung ($P_N$) in Abhängigkeit von der Zeit (t) für die 4Takt-Dieselbrennkraftmaschine (1) in nennwertbezogenen Motorleistungskurven (29 - 31) und in nennwertbezogenen Verbraucherleistungskurven (32 - 34), wobei sich die ausgezogen dargestellten Kurven (31) und (34) ohne Verwendung von Zusatzgas (19) ergaben und die gestrichelt dargestellten Kurven (29) sowie (32) mit erfindungsgemäßem Einsatz von Zusatzgas (19). Die gepunktet dargestellten Kurven (30) und (33) ergaben sich bei der konventionellen Zufuhr von Zusatzgas (19) in den Kompressor (13), wie es in Fig. 1 durch die gepunktet dargestellte Druckgasleitung (L) angedeutet ist. Man erkennt daraus, daß mit dem erfindungsgemäßen Verfahren die Nennleistung ($P_N$) am schnellsten erreicht wird.

Fig. 5 zeigt komputersimuliert das Verhältnis einer Drehzahl der Motorantriebswelle (5) bzw. einer Motordrehzahl ($n_5$) zu einer Nenndrehzahl ($n_N$) in Abhängigkeit von der Zeit (t) für die 4Takt-Dieselbrennkraftmaschine (1) in nennwertbezogenen Drehzahlkurven (35 - 37) und eines effektiven Mitteldruckes ($p_{me}$) im Brennraum (6) in MPa in Kurven des effektiven Mitteldruckes bzw. in Mitteldruckkurven (38 - 40), wobei sich die ausgezogen dargestellten Kurven (37) und (40) ohne Verwendung von Zusatzgas (19) ergaben und die gestrichelt dargestellten Kurven (35) sowie (38) mit erfindungsgemäßem Einsatz von Zusatzgas (19). Die gepunktet dargestellten Kurven (36) und (39) ergaben sich bei der konventionellen Zufuhr von Zusatzgas (19) in den Kompressor (13). Man erkennt daraus, daß mit dem erfindungsgemäßen Verfahren die Nenndrehzahl ($n_N$) am schnellsten erreicht wird.

Fig. 6 zeigt komputersimuliert ein Verbrennungsverhältnis ($\lambda_V$) in Abhängigkeit von der Zeit (t) für die 4Takt-Dieselbrennkraftmaschine (1) in Kurven (41 - 43), wobei sich die ausgezogen dargestellte Kurve (43) ohne Verwendung von Zusatzgas (19) ergab und die gestrichelt dargestellte Kurve (41) mit erfindungsgemäßem Einsatz von Zusatzgas (19). Die gepunktet dargestellte Kurve (42) ergab sich bei der konventionellen Zufuhr von Zusatzgas (19) in den Kompressor (13) über die Zusatzleitung (L). Für das Verbrennungsverhältnis ($\lambda_V$) gilt die Beziehung:

$$\lambda_V = m_{LZ}/(m_B \cdot L_{min}),$$

wobei $m_{LZ}$ die dem Brennraum (6) zugeführte Luftmasse, $m_B$ die zugeführte Brennstoffmasse und $L_{min}$ ein stöchiometrisches Luft/Kraftstoffverhältnis, d. h., die Mindestmenge Luft, welche zur Verbrennung des Kraftstoffes erforderlich ist, bedeuten. Man erkennt daraus, daß mit dem erfindungsgemäßen Verfahren der stationäre Endwert des Verbrennungsverhältnisses ($\lambda_V$) am schnellsten erreicht wird. t = 2 s bedeutet bei den Fig. 4 - 6 den Zeitpunkt einer Lastaufschaltung. Erhöht man im Zeitpunkt t= 2 s durch die Zufuhr der Zusatzluft (19) die Luftmenge in den Motorzylindern (Z1 - Zn) um 10 %, so erreicht man damit zum Zeitpunkt t = 6 s eine Erhöhung des Verbrennungsverhältnisses ($\lambda_V$) um 150 %. Die Zusatzluft (19) erlaubt die Verbrennung von zusätzlichem Dieselkraftstoff. Daraus resultiert eine schnellere Beschleunigung des Abgasturboladers (10).

Fig. 7 zeigt schematisch eine 2Takt-Dieselbrennkraftmaschine (1'), für die das erfindungsgemäße Verfahren ebenfalls anwendbar ist. Im Zylinderkopf einer Motorzylindereinheit (Z1') sind Kraftstoffeinspritzdüsen (7a, 7b, 7c) und Anlaßventile (V1a, V1b, V1c) kreisförmig um einen zentralen Abgasauslaß (A) angeordnet. (SE) bezeichnet einen von mehreren seitlichen Frischlufteinlässen bzw. Frischlufteinlaßschlitzen.

Fig. 8 zeigt eine der Darstellung in Fig. 2 entsprechende zeitliche Aufeinanderfolge der Öffnungen der Ventile (VA) und (V1a) sowie der Frischlufteinlaßschlitze (SE) der 2Takt-Dieselbrennkraftmaschine (1'), wobei auf der Abszisse der Kurbelwinkel ($\varphi$) in Grad und auf der Ordinate die Frischlufteinlaß-Öffnungsfläche ($F_E$) in willkürlichen Einheiten aufgetragen sind. Eine Flächenkurve (26) für das Luftauslaßventil (VA) zeigt an, daß dieses sich vor dem unteren Totpunkt (UT) in einer 1. Kurbelwinkelposition ($\varphi_1$) zu öffnen beginnt und im gleichen Winkelabstand hinter diesem unteren Totpunkt (UT) schließt. Eine Flächenkurve (27) für die Frischlufteinlaßschlitze (SE) zeigt an, daß diese sich vor dem unteren Totpunkt (UT) in einer 2. Kurbelwinkelposition ($\varphi_2$) nach der Kurbelwinkelposition ($\varphi_1$) zu öffnen beginnen und im gleichen Winkelabstand hinter diesem unteren Totpunkt (UT) schließen. Nach dem Schließen dieser Frischlufteinlaßschlitze (SE) beginnen sich die Anlaßventile (V1a, V1b, V1c) gemäß einer Flächenkurve (28') zu öffnen, wobei der Übersichtlichkeit wegen nur das Anlaßventil (V1a) eingezeichnet ist. Diese Anlaßventile (V1a, V1b, V1c) schließen kurz vor dem Erreichen des nächsten oberen Totpunktes (OT) und vor dem Beginn der Zündung in dem Zündzeitpunkt ($\varphi_Z$), womit die Kompressionsphase endet. Vorzugsweise beginnt die Öffnung der Anlaßventile (V1a, V1b, V1c) nach dem Schließen des Luftauslaßventils (VA), wie es durch die Flächenkurve (28) dargestellt ist. Eine gestrichelt dargestellte Flächenkurve (28") zeigt die Öffnung der Anlaß- bzw. Zusatzgasventile (V1a, V1b, V1c) beim Start der 2Takt-Dieselbrennkraftmaschine (1').

Wichtig ist, daß das Startgas (19) und die Anlaßventile (V1a, V1b, V1c) nicht nur für den Start der Dieselbrennkraftmaschinen (1, 1') genutzt werden, sondern, mit geänderten Steuerzeiten, auch für die Zufuhr von Zusatzluft nach dem Start, während des Normalbetriebs.

Die Erfindung ist auch bei Dieselbrennkraftmaschinen (1, 1') ohne Startgas-Start anwendbar.

Vorzugsweise wird das Zusatzgas (19) dem Brennraum (6) der Dieselbrennkraftmaschine (1, 1') während transienter Belastungsvorgänge unter einem Druck im Bereich von 0,6 MPa - 3 MPa zugeführt.

Während einer stationären Teillast der Dieselbrennkraftmaschine (1, 1') wird das Zusatzgas (19) dem Brennraum (6) unter einem Druck im Bereich von 100 kPa - 800 kPa zugeführt.

Bei einem Betrieb einer Dieselbrennkraftmaschine (1, 1') nach dem sog. Millerverfahren in einem unteren Lastbereich bis 50 % der Nennlast kann dieses Zusatzgas (19) ohne Überdruck durch die Zylinder (Z1, Z1', Zn) der Dieselbrennkraftmaschine (1, 1') angesaugt werden. Dabei ist das Druckgasregelventil (17) gemäß Fig. 1 geschlossen und ein Frischluftventil (17a) zum Einlaß von Frischluft (14) geöffnet. Werden die Dieselbrennkraftmaschinen (1, 1') nur nach dem Millerverfahren ohne Überdruck betrieben, so erübrigen sich die Ventile (17) und (17a) sowie der Gasvorratsbehälter (16). Das Zusatzgas (19) kann aus der Umgebung (14) der Dieselbrennkraftmaschine (1, 1') oder vom Ausgang des Kompressors (13) des Abgasturboladers (10) durch die Zylinder (Z1, Z1', Zn) der Dieselbrennkraftmaschine (1, 1') angesaugt werden.

BEZEICHNUNGSLISTE

| | |
|---|---|
| 1 | 4Takt-Dieselbrennkraftmaschine |
| 1' | 2Takt-Dieselbrennkraftmaschine |
| 2 | Kolben |
| 3 | Pleuelstange |
| 4 | Kurbel |
| 5 | Motorantriebswelle |
| 6 | Brennraum |
| 7, 7a, 7b, 7c | Kraftstoffeinspritzdüsen |
| 8 | Frischluftansaugleitung |
| 9 | Abgasleitung |
| 10 | Abgasturbolader |
| 11 | Turbine von 10 |
| 12 | elektrische Maschine von 10 |
| 13 | Kompressor von 10 |
| 14 | Frischluft |
| 15 | Abgas |
| 16 | Gasvorratsbehälter, Druckluftflasche |
| 17 | Druckgasregelventil, Druckreduzierventil |
| 17a | Frischluftventil |
| 18 | Startgasverteiler, Zuluftverteiler, Gasverteiler |
| 19 | Startgas, Zusatzgas, Druckluft, sauerstoffhaltiges Gas |
| 20 - 23 | Flächenkurven geöffneter Ventile von 1 |
| 21' | Schließlinie von 21, entsprechend dem Miller-Verfahren |
| 24, 25 | Druckkurven für Leerlauf bzw. Vollast |
| 26 - 28 | Flächenkurven geöffneter Ventile einer 2Takt-Dieselbrennkraftmaschine |
| 29 - 34 | zeitabhängige Kurven von nennwertbezogenen Motor- bzw. Verbraucherleistungen von 1 |
| 35 - 37 | Drehzahlkurven nennwertbezogener Drehzahlen von 1 |
| 38 - 40 | zeitabhängige Mitteldruckkurven des effektiven Mitteldruckes im Brennraum eines Zylinders von 1 |
| 41 - 43 | Kurven des Verbrennungsverhältnisses $\lambda_V$ in Abhängigkeit von der Zeit |
| A | Abgasauslaß |
| E | Frischlufteinlaß, Gaseinlaß |
| E1a, E1b | Gaseinlässe für Startgas/Zusatzgas, Startgaseinlässe |
| $F_E$ | Frischlufteinlaß-Öffnungsfläche |
| K | Luftkühler |
| L, L1a, L1b, Ln | Druckgasleitungen, Zusatzgasleitungen |
| $n_5$ | Drehzahl von 5, Motordrehzahl |
| $n_N$ | Nenndrehzahl |
| OT | oberer Totpunkt |
| P | Leistung von 1 |
| $p_N$ | Nennleistung von 1 |
| $p_6$ | Druck in 6 |
| SE | Frischlufteinlaßschlitze |
| t | Zeit |
| UT | unterer Totpunkt |
| VA | Luftauslaßventil |
| VE | Lufteinlaßventil |
| V1a, V1b, V1c | Anlaßventile, Zusatzgasventile, Rückschlagventile |
| Z1 - Zn | Motorzylindereinheiten von 1 |
| Z1' | Motorzylindereinheit von 1' |
| $\varphi$ | Kurbelwinkel |
| $\varphi_1, \varphi_2$ | Kurbelwinkelpositionen |
| $\varphi_z$ | Zündzeitpunkt, Zündwinkelposition |
| $\lambda_V$ | Verbrennungsverhältnis bei 1 |

**Patentansprüche**

**1.** Verfahren zum Betrieb einer Dieselbrennkraftmaschine (1, 1'),

a) bei dem Frischluft (14) für die Verbrennung eines Kraftstoff-Luftgemisches durch einen Abgasturbolader (10) verdichtet und durch mindestens einen Frischlufteinlass (E, SE) in einen Brennraum (6) ihrer Zylinder (Z1, Z1', Zn) zugeführt wird,

b) bei dem beim Start der Dieselbrennkraftmaschine (1, 1') dem Brennraum (6) Zusatzgas (19) als Startgas durch mindestens einen separaten Zusatzgaseinlass (E1a, E1b) mittels mindestens eines separaten Zusatzgasventils (V1a, V1b, V1c) zuführbar ist,

c) bei dem während des Betriebes bei Teillast und/oder transienter Belastung der Dieselbrennkraftmaschine (1, 1'), vor einem Zünden des Kraftstoff-Luftgemisches dem Brennraum (6) zusätzlich sauerstoffhaltiges Zusatzgas (19) durch mindestens einen dieser separaten Zusatzgaseinlässe (E1a, E1b) zugeführt wird, **dadurch gekennzeichnet, dass**

d) während des Betriebes bei Teillast und/oder transienter Belastung der Dieselbrennkraftmaschine (1, 1') das zusätzliche sauerstoffhaltige Zusatzgas (19) dem Brennraum (6) nach dem Schließen des Frischlufteinlasses (VE, SE) zugeführt wird.

**2.** Verfahren nach Anspruch 1, **dadurch gekennzeichnet, dass** das sauerstoffhaltige Zusatzgas (19) während des Betriebes bei Teillast und/oder transienter Belastung der Dieselbrennkraftmaschine (1, 1') dem Brennraum (6) nach einem Schließen eines Luftauslassventils (VA) zugeführt wird.

**3.** Verfahren nach Anspruch 1, **dadurch gekennzeichnet, daß** das sauerstoffhaltige Zusatzgas (19) diesem Brennraum (6), während des Betriebes bei Teillast und/oder transienter Belastung der Dieselbrennkraftmaschine (1, 1'), vor einem Einspritzen eines Dieselkraftstoffes in diesen Brennraum (6) zugeführt wird.

**4.** Verfahren nach einem der vorhergehenden Ansprüche, **dadurch gekennzeichnet, daß** dieses Zusatzgas (19) während des Betriebes bei Teillast und/oder transienter Belastung der Dieselbrennkraftmaschine (1, 1') diesem Brennraum (6) längstens bis zu einem Zündzeitpunkt ($\varphi_Z$) zugeführt wird.

**5.** Verfahren nach einem der vorhergehenden Ansprüche, **dadurch gekennzeichnet, daß** dieses Zusatzgas (19) gleichzeitig durch mehrere Zusatzgaseinlässe (E1a, E1b) diesem Brennraum (6) zugeführt wird.

**6.** Verfahren nach einem der vorhergehenden Ansprüche, **dadurch gekennzeichnet, daß** dieses Zusatzgas (19) diesem Brennraum (6) während transienter Belastungsvorgänge der Dieselbrennkraftmaschine (1, 1') unter einem Druck im Bereich von 1,5 MPa - 3 MPa zugeführt wird.

**7.** Verfahren nach einem der Ansprüche 1 bis 6, **dadurch gekennzeichnet, daß** dieses Zusatzgas (19) diesem Brennraum (6) während einer stationären Teillast der Dieselbrennkraftmaschine (1, 1') unter einem Druck im Bereich von 100 kPa - 800 kPa zugeführt wird.

**8.** Verfahren nach Anspruch 1, **dadurch gekennzeichnet, daß** dieses Zusatzgas (19) aus der Umgebung (14) der Dieselbrennkraftmaschine (1, 1') oder vom Ausgang eines Kompressors (13) eines Abgasturboladers (11) durch die Zylinder (Z1, Z1', Zn) der Dieselbrennkraftmaschine (1, 1') angesaugt wird.

**Claims**

**1.** Method for operating a diesel internal combustion engine (1, 1'),

a) in which fresh air (14) for the combustion of a fuel/air mixture is compressed by an exhaust-gas turbocharger (10) and is supplied into a combustion space (6) of its cylinders (Z1, Z1', Zn) through at least one fresh-air inlet (E, SE),
b) in which, during the starting of the diesel internal combustion engine (1, 1'), additional gas (19) is capable of being supplied as starting gas to the combustion space (6) through at least one separate additional-gas inlet (E1a, E1b) by means of at least one separate additional-gas valve (V1a, V1b, V1c),
c) in which, when the diesel internal combustion engine (1, 1') is operating under part load and/or under transient load, oxygen-containing additional gas (19) is additionally supplied to the combustion space (6) before ignition of the fuel/air mixture through at least one of these separate additional-gas inlets (E1a, E1b),
**characterized in that**,
d) when the diesel internal combustion engine (1, 1') is operating under part load and/or under transient load, the additional oxygen-containing additional gas (19) is supplied to the combustion space (6) after the closing of the fresh-air inlet (VE, SE).

**2.** Method according to Claim 1, **characterized in that**, when the diesel internal combustion engine (1, 1') is operated under part load and/or transient load, the oxygen-containing additional gas (19) is supplied to the combustion space (6) after a closing of an air outlet valve (VA).

**3.** Method according to Claim 1, **characterized in that**, when the diesel internal combustion engine (1, 1') is operating under part load and/or under transient load, the oxygen-containing additional gas (19) is supplied to this combustion space (6) before a diesel fuel is injected into this combustion space (6).

**4.** Method according to one of the preceding claims, **characterized in that**, when the diesel internal combustion engine (1, 1') is operating under part load and/or transient load, this additional gas (19) is supplied to this combustion space (6) at the latest up to an ignition point ($\varphi_z$).

**5.** Method according to one of the preceding claims, **characterized in that** this additional gas (19) is supplied to this combustion space (6) simultaneously through a plurality of additional-gas inlets (E1a, E1b).

**6.** Method according to one of the preceding claims, **characterized in that** this additional gas (19) is supplied to this combustion space (6) under a pressure in the range of 1.5 MPa - 3 MPa during transient load actions on the diesel internal combustion engine (1, 1').

**7.** Method according to one of Claims 1 to 6, **characterized in that** this additional gas (19) is supplied to this combustion space (6) under a pressure in the range of 100 kPa - 800 kPa when the diesel internal combustion engine (1, 1') is under a stationary part load.

**8.** Method according to Claim 1, **characterized in that** this additional gas (19) is sucked in from the surroundings (14) of the diesel internal combustion engine (1, 1') or from the outlet of a compressor (13) of an exhaust-gas turbocharger (11) by the cylinders (Z1, Z1', Zn) of the diesel internal combustion engine (1, 1').

**Revendications**

**1.** Procédé pour le fonctionnement d'un moteur diesel à combustion interne (1, 1') avec lequel

a) de l'air frais (14) pour la combustion d'un mélange de carburant et d'air est comprimé par un turbocompresseur à suralimentation d'échappement (10) et est amené par au moins une prise d'air frais (E, SE) dans une chambre de chauffe (6) de ses cylindres (Z1, Z1', Zn),
b) lors du démarrage du moteur diesel à combustion interne (1, 1'), la chambre de combustion (6) peut être alimentée en gaz d'appoint (19) en tant que gaz de démarrage par au moins une arrivée de gaz d'appoint (E1a, E1b) distincte moyennant au moins une soupape de gaz d'appoint distincte (V1a, V1b, V1c),
c) pendant le fonctionnement à charge partielle et/ou charge transitoire du moteur diesel à combustion interne (1, 1'), la chambre de chauffe (6) est additionnellement alimentée en gaz d'appoint oxygéné (19) par au moins une de ces arrivées de gaz d'appoint (E1a, E1b) distinctes, avant un allumage du mélange à base de carburant et d'air,
**caractérisé en ce que**
d) pendant le fonctionnement en cas de charge partielle et/ou charge transitoire du moteur diesel à combustion interne (1, 1'), le gaz d'appoint supplémentaire oxygéné (19) est amené à la chambre de chauffe (6) après la fermeture de la prise d'air frais (VE, SE).

**2.** Procédé selon la revendication 1, **caractérisé en ce que** le gaz d'appoint (19) oxygéné, pendant le fonctionnement avec charge partielle et/ou charge transitoire du moteur diesel à combustion interne (1, 1'), est amené à la chambre de chauffe (6) après une fermeture de la soupape de sortie d'air (VA).

**3.** Procédé selon la revendication 1, **caractérisé en ce que** le gaz d'appoint (19) oxygéné est amené à cette chambre de chauffe (6) pendant le fonctionnement avec charge partielle et/ou charge transitoire du moteur diesel à combustion interne (1, 1'), avant une injection d'un carburant diesel dans cette chambre de chauffe (6).

**4.** Procédé selon l'une quelconque des revendications précédentes, **caractérisé en ce que** ce gaz d'appoint (19) est amené à cette chambre de chauffe (6) pendant le fonctionnement avec charge partielle et/ou charge transitoire du moteur diesel à combustion interne (1, 1') au plus tard jusqu'à un moment d'allumage ($\varphi_z$).

**5.** Procédé selon l'une quelconque des revendications précédentes, **caractérisé en ce que** ce gaz d'appoint (19) est amené simultanément par plusieurs arrivées de gaz d'appoint (E1a, E1b) à cette chambre de chauffe (6).

**6.** Procédé selon l'une quelconque des revendications précédentes, **caractérisé en ce que** ce gaz d'appoint (19) est amené à cette chambre de chauffe (6) pendant des processus de charge transitoire du moteur diesel à combustion interne (1, 1') avec une pression dans une plage de 1,5 MPa - 3 MPa.

7. Procédé selon l'une quelconque des revendications 1 à 6, **caractérisé en ce que** ce gaz d'appoint (19) est amené à cette chambre de chauffe (6) pendant une charge partielle stationnaire du moteur diesel à combustion interne (1, 1') avec une pression dans une plage de 100 kPa - 800 kPa.

8. Procédé selon la revendication 1, **caractérisé en ce que** ce gaz d'appoint (19) est aspiré à partir des alentours (14) du moteur diesel à combustion interne (1, 1') ou à partir de la sortie d'un surcompresseur (13) d'un turbocompresseur à suralimentation d'échappement (11) par les cylindres (Z1, Z1', Zn) du moteur diesel à combustion interne (1, 1').

FIG.1

FIG.2

FIG.3

FIG.7

FIG.8

FIG.4

FIG.5

FIG.6